# EUROPEAN PATENT SPECIFICATION

(11) **EP 4 362 659 B1**
(45) Date of publication and mention of the grant of the patent: **06.08.2025**
(21) Application number: 22734068.4
(22) Date of filing: 21.06.2022
(51) Int. Cl.: A01G 9/18, B01D 53/14

(54) **METHOD FOR RECOVERY OF CHEMICALLY ABSORBED CO2 WITH LOW ENERGY CONSUMPTION**
VERFAHREN ZUR RÜCKGEWINNUNG VON CHEMISCH ABSORBIERTEM CO2 MIT NIEDRIGEM ENERGIEVERBRAUCH
PROCÉDÉ DE RÉCUPÉRATION DE CO2 CHIMIQUEMENT ABSORBÉ AYANT UNE FAIBLE CONSOMMATION D'ÉNERGIE

(30) Priority: 01.07.2021 NL 2028603
(43) Date of publication of application: 08.05.2024
(73) Proprietor: Value Group B.V., 3029 AM Rotterdam (NL)
(72) Inventor: NIJST, Christiaan Leo Evert, 2594 CP Den Haag (NL); SCHRAUWEN, Franciscus Johannes Maria, 2261 BV Leidschendam (NL)
(74) Representative: Arnold & Siedsma
(86) International application number: PCT/NL2022/050351
(87) International publication number: WO 2023/277681

(56) References cited:
- EP-A1- 0 537 593
- WO-A2-2010/019600
- CN-U- 210 410 106
- JP-A- 2021 058 121
- US-A1- 2013 334 463
- US-A1- 2018 339 265

## Description

### TECHNICAL FIELD

The present invention concerns a method for removal of carbon dioxide (CO₂) from a gas stream using chemical solvents such as monoethanolamine (MEA). In particular, a method is provided to capture CO₂ from flue gas, to avoid CO₂ release to the atmosphere, which method uses chemical absorption and recovery of CO₂ with low energy consumption.

### BACKGROUND ART

A typical method of removing acid gases such as CO₂ (and potentially other gases such as hydrogen sulfide or H₂S) from a gas stream involves using an absorber unit and a regenerator unit, supplemented with suitable accessory equipment. In the absorber unit, a down flowing amine solvent absorbs the acid gas such as CO₂ from an up flowing CO₂-containing gas stream to produce a gas stream that is essentially devoid of CO₂ and optionally other acid gases such as H₂S, and an amine solvent enriched with the absorbed acid gases. The resultant enriched amine solvent is then routed into the regenerator unit, for instance embodied as a stripper provided with a reboiler, to produce regenerated or "lean" amine that is recycled for reuse in the absorber. The stripped overhead gas from the regenerator typically comprises a concentrated acid gas stream that is rich in CO₂. In this way, pure CO₂ may be recovered. The recovered pure CO2 may then be transported and stored in a suitable storage, for instance underground.

The above-described known method involving absorption and recovery through stripping of CO₂ suffers from a relatively high energy consumption. As an example, the energy required is typically in the range of 3-4 GJ per ton of recovered CO₂. This may increase the amount of flue gas from which the CO₂ must be captured. The high energy input, needed to operate an integrated chemical absorber/stripper unit producing pure and pressurized CO₂, may be reduced by proper selection of the chemical solvent, its concentration, operating conditions, heat integration, and other. However, a significant part of the energy requirement cannot be reduced: recovery of CO₂ in pure form at increased pressure requires high stripper temperatures to release the chemically bound CO₂ from the solvent. This takes sensible heat, to heat up the solvent to stripper temperature, and power for pumping and compression.

JP2021058121A discloses a plant cultivation installation having a CO₂-supply. CN210410106U discloses a recyclable carbon dioxide gas fertilizer collecting device. WO2010/019600A2 discloses a method and apparatus for extracting CO₂ from air, and for delivering the extracted CO₂ to controlled environments, such as a greenhouse.

It is an aim of the present invention therefore to provide a method for recovery and reusing CO₂ from a sorbent, with a low energy consumption at low temperature levels.

### DISCLOSURE OF THE INVENTION

These and other aims are provided by a method in accordance with claim 1. The invention provides a method for removing carbon dioxide (CO₂) from a gas, for instance a flue gas, the method comprising:
a) providing a sorbent liquid for the CO₂, such as an amine solvent, in counter-current flow with a gas stream comprising the CO₂ and absorbing the CO₂ in the sorbent liquid so as to obtain a gas with a reduced concentration of CO₂, and a sorbent liquid enriched with the absorbed CO₂;
b) stripping the absorbed CO₂ from the enriched sorbent liquid to obtain a regenerated sorbent liquid and CO₂-containing gas,
wherein
- the absorbing step a) is performed at a first facility provided in a first location;
- the sorbent liquid enriched with the absorbed CO₂ is transported from the first facility to a second facility distinct from the first facility and provided in a second location at a distance at least 3 kilometers from the first location;
- the stripping step b) is performed at the second facility and at least 24 hours later than the absorbing step a);
- there is no pipeline connection between the first facility and the second facility; and
- the second facility is a greenhouse.

One element of the present invention is to use the loaded sorbent liquid as means for transport and storage of the absorbed CO₂.

A further element of the invention is that transportable containers are used for transport and storage of enriched and lean sorbent liquid. There is no direct, permanent pipe connection between the first facility, where the absorbing step is performed, and the second facility, where the stripping step is performed.

A further element of the invention is that the CO₂ is stripped from the sorbent liquid at the location of an end-user of the CO₂, under conditions which preferably are adapted to the specific requirements of the end-user.

The invented method enables re-use of captured CO₂ with efficient transport, optional intermediate storage, low energy input at low temperature levels, low operating costs, without the need for permanent pipeline connections and/or stationary storage tanks. The invented method enables complete uncoupling of time, rate and location of CO₂ capture and CO₂ recovery and re-use.

The method provides a sorbent liquid for the CO₂, such as an amine solvent. Suitable amine solvents comprise diethanolamine (DEA), monoethanolamine (MEA), methyldiethanolamine (MDEA), diisopropanolamine (DIPA), and also aminoethoxyethanol (diglycolamine) (DGA). Other solvents and mixtures of solvents may also be used, optionally with or without additives.

Another embodiment of the invention relates to a method wherein the sorbent liquid enriched with the absorbed CO₂ is stored at the first facility before transporting it to the second facility.

Yet another embodiment of the invention relates to a method wherein the sorbent liquid enriched with the absorbed CO₂ is stored at an intermediate location in between the first and second facilities.

Yet another embodiment of the invention relates to a method wherein the sorbent liquid enriched with the absorbed CO₂ is stored at the second facility.

According to yet another embodiment, a method is provided wherein the total time of transporting and storing the sorbent liquid enriched with the absorbed CO₂ is at least 24 hours.

According to yet another embodiment, a method is provided wherein any number of absorbing facilities can be combined with any number intermediate storage facilities and with any number of stripping facilities.

According to yet another embodiment, a method is provided wherein the rate of absorption in the first facility, or facilities, and the rate of stripping in the second facility (or facilities) are independent from each other.

The transport of the absorbed CO₂ may be performed by any method known in the art. According to a preferred embodiment, a method is provided wherein the sorbent liquid enriched with the absorbed CO₂ is transported at ambient pressure and/or ambient temperature, for instance by a road transport vehicle. Indeed, according to the invention, there is no need to compress and/or liquefy the recovered CO₂ for transport, as is typically done in prior art methods. This eliminates costs of compression equipment and energy consumption thereof. A further advantage is that there also is no need for dedicated CO₂ transportation (or storage) facilities such as pipelines and/or dedicated containment facilities. The CO₂ absorbed in the sorbent liquid may be handled by conventional facilities including lorries, barges, tank containers, warehousing, and the like.

A preferred embodiment in this context provides a method wherein direct pipe connections between the first facility and the second facility are lacking.

Another embodiment provides a method wherein a shortest distance between the first and the second facilities is at least 4 km, more preferably at least 5 km, and most preferably at least 10 km. With a shortest distance between a first location A and a second location B is meant in the context of the present disclosure the distance covered by a linear line connecting the two locations A and B.

The first and second facility may be stationary or non-stationary. An embodiment of choice relates to a method wherein the first facility comprises a sailing or harboured vessel and the second facility comprises a, preferably stationary, onshore facility. The shortest distance between the first location A of the vessel and the second location B of the on-shore facility is then defined as the distance covered by a linear line connecting the location A in which the vessel is harboured, and location B.

One advantage of the invention relates to the possibility of adapting the recovery- or stripping-rate of the CO₂ from the sorbent according to the needs, conditions, and specific requirements of an end-user, for instance situated at the second facility.

Another advantage of the invention relates to the possibility to perform the recovery or stripping of the CO₂ from the sorbent at any time according to the needs of an end-user, for instance situated at the second facility. The time difference between absorption and recovery is not limited to a maximum of one day as is typical in prior art methods. The time difference is at least 24 hours, but this can be extended to multiple days, weeks or months.

According to an embodiment of the invention, a method is provided wherein the stripping step b) is performed at a temperature below 100°C, more preferably below 70°C, even more preferably below 40°C, and most preferably at ambient temperature. Desorption of the CO₂ from the absorbent liquid or solvent is in this embodiment performed at low or mildly elevated (relative to ambient) temperature. This offers the possibility of saving sensible heat. In a conventional integrated system according to the state of the art, stripping is performed at temperatures in the range of 110-140°C, which means that sensible heat must be supplied at temperatures accordingly. In conventional stripping according to the state of the art, the required stripping heat supply may account for half of the total energy consumption of the process or more. In the invented method, the heat required can be obtained from the stripping medium itself, such as air extracted from a greenhouse in one embodiment, at substantially lower temperatures in comparison to prior art.

According to yet another embodiment, a method is provided wherein the stripping step b) is performed at ambient pressure. Desorption of the CO₂ from the sorbent liquid may be performed against a relatively or even extremely low CO₂ partial pressure in the gas phase. Ambient air contains about 420 ppm CO₂ and, when used as stripping gas, this results in a CO₂ partial pressure of only about 0.042 kPa in the inlet of a stripper operated at ambient pressure. It is obvious to a person skilled in the art that this is very beneficial for a shift of the solvent-CO₂ chemical equilibrium to release CO₂ to the gas phase. This enables a high degree of recovery of CO₂ from the solvent. In conventional, integrated stripping according to the state of the art the CO₂ partial pressure is within the range of 100-300 kPa.

A particularly useful embodiment provides a method wherein the second facility comprises a greenhouse and the stripping step b) uses greenhouse air and/or ambient air as stripping gas and/or as transport medium of the CO₂-containing gas back to the greenhouse. A greenhouse user does not require CO₂ in pure and/or pressurized form, and the invented method offers an adequate CO₂ source for a greenhouse user. The greenhouse air is enriched by CO₂ stripped from the absorbent liquid to enhance crop growth. Stripping is preferably done by warm air that originates from the greenhouse itself.

In a preferred embodiment of the method therefore, the CO₂-containing gas as obtained after the stripping step b) is carried back to the greenhouse to enhance crop growth. The greenhouse air in this embodiment acts as heat source, as stripping fluid for the CO₂ recovery process, and as transport medium to the greenhouse.

The dissociation energy for CO₂, chemically absorbed in aqueous amine solutions, is typically in the range of -50 to -100 kJ/mole CO₂. As known in the art, maximum enhancement of crop growth in a greenhouse is typically closely achieved (pending crop) by adding approx. 600 ppm CO₂ to the CO₂ already present in ambient air. It will be obvious to a person skilled in the art that the temperature drop of air, from which the dissociation heat is extracted to achieve 600 ppm CO₂ enrichment, will be in the range of 1-2°C.

Another preferred embodiment relates to a method as claimed in any one of the preceding claims, wherein the stripping step b) is carried out with a stripper unit, preferably without a reboiler and/or condenser unit.

The method according to several embodiments offers several advantages. The stripper may operate at ambient pressure and at moderately elevated temperature. The hardware used may thus be simple, safe and cost-effective. Equipment, solvent piping and air ducting may be constructed from cheap materials such as (recycled) plastic. A small pump and a greenhouse fan in other embodiments provide solvent- and air-circulation. This represents a significant simplification compared to a conventional stripper according to the state of the art, which is typically a steel pressure vessel, fitted with a reboiler and a top condenser, and operated at temperatures above 100°C.

The heat required is at a low temperature level in some embodiments. Therefore, it is easy to obtain and at low cost, compared to conventional stripper heat input, which is typically provided as steam. Also, there may be no or less need for cooling water (or another coolant) required for the condenser in a conventional absorber/stripper. In addition, Also, a steam source and/or a boiler feed water preparation system and/or a condensate processing system may not be needed either.

The desorption capacity of the stripper is small compared to a conventional integrated stripper. The CO₂ stripping capacity is in preferred embodiments matched with the CO₂ uptake capacity of the crop in the greenhouse, and there is no need to adapt to the capacity of the absorber in a conventional CO₂ capture system. The time- and rate- of CO₂-absorption and -stripping are independent from each other. This is of particular practical importance in a greenhouse, without assimilation lighting during night-time, when the crop is not consuming CO₂, as CO₂ supply can be stopped. Capacities of external power supply for heating, pumping and ventilation may be selected small and may further be provided locally by CO₂ neutral options such as solar cells and solar heaters.

Further, the absorbent liquid (chemical solvent) may in certain embodiments be heated to low or moderate temperatures only. Such temperatures are significantly lower than the approximate 110-140°C temperature level required for conventional integrated strippers. The reduced temperature also slows down or even prevents thermal degradation of the solvent.

The low stripping temperature may also reduce evaporation losses of the chemical solvent. An option according to an embodiment is to add a guard bed and/or a washing section to the outlet of the stripper to capture traces of solvent vapor.

By using air (in a preferred embodiment extracted from the greenhouse) for the stripping, the chemical solvent is exposed to oxygen. As will be known to persons skilled in the art, this may contribute to degeneration of the chemical solvent. However, in a preferred embodiment the stripping is performed at ambient temperature and at ambient pressure and the frequency of absorption/stripping cycles of the solvent is very low compared to prior art. This reduces and slows down degeneration of the chemical solvent to a low level, compared to prior art where stripping is performed without presence of oxygen but at high pressures and temperatures and at a high frequency of absorption/stripping cycles.

The method according to certain embodiments also provides safe operation. Release of CO₂ from the solvent at the relatively low operating temperatures according to embodiments is slow, and CO₂ partial pressure may be very low. This eliminates suffocation risk of personnel involved, compared to conventional stripping where pure CO₂ at pressure must be handled.

According to another embodiment, a method is provided wherein the CO₂-containing gas obtained from the stripping step b) contains from 100 to 10000 ppm (1 vol.%), more preferably from 200 to 5000 ppm, and most preferably from 400 ppm to 1500 ppm CO₂.

In yet another embodiment of the invented method, at least 10 wt.% of the CO₂ that is present in the gas stream comprising the CO₂ is absorbed in the sorbent liquid during the absorbing step a), more preferably at least 30 wt.% CO₂, and most preferably at least 50 wt.% CO₂.

In another embodiment a method is provided wherein at most 90 wt.% of the CO₂ that is present in the gas stream comprising the CO₂ is absorbed in the sorbent liquid during the absorbing step a), more preferably at most 70 wt.% CO₂, and most preferably at most 50 wt.% CO₂.

According to an embodiment of the invention, the stripper in the second facility can be used in reverse mode as an absorber. In this method flue gas from a fired heater, used during night time to provide heat to a greenhouse in case no assimilation light is used, is carried through the absorber. The sorbent liquid is enriched with CO₂ absorbed from the flue gas. This method is useful in a greenhouse during night time, when no assimilation light is used. At such conditions there is no CO₂ consumption by the crop. The CO₂ in the flue gas is not wasted but is captured by the solvent. During daytime, the stripper is used in the normal operating mode as a stripper, CO₂ released from the sorbent is utilized to enhance crop growth.

It is explicitly mentioned that the embodiments disclosed in the present application may be combined in any possible combination of these embodiments, and that each separate embodiment may be the subject of a divisional application.

### BRIEF DESCRIPTION OF THE FIGURES

The above brief description, as well as other objects, features and advantages of the present invention will be more fully appreciated by reference to the following detailed description of a presently preferred, but nonetheless illustrative embodiment, when taken in conjunction with the accompanying drawing wherein:
Fig. 1 is a schematic representation of CO₂ absorption from a gas stream comprising CO₂. In the example shown CO₂ is absorbed from flue gas, released by the propulsion system of a vessel, into a sorbent liquid. The sorbent liquid is contained in an exchangeable container;
Fig. 2 is a schematic representation of CO₂ absorption from a gas stream comprising CO₂. In the example shown CO₂ is absorbed from the flue gas of a vessel into a sorbent liquid. The sorbent liquid is contained in a permanently installed tank on board of the vessel;
Fig. 3 is a schematic representation of unloading/reloading of an exchangeable tank containing sorbent liquid at a harbor;
Fig. 4 is a schematic representation of unloading/reloading sorbent liquid with a hose from a tank which is permanently installed aboard a vessel;
Fig. 5 is a schematic representation of transport of a tank containing sorbent liquid with absorbed CO₂ to an onshore facility, a greenhouse. Intermediate storage of the tank containers is an option. The sorbent liquid is transported and stored at ambient conditions;
Fig. 6 is a schematic representation of transport of a tank containing sorbent liquid with absorbed CO₂ to an onshore facility for recovery of pure CO₂. Intermediate storage of tank containers with sorbent liquid, with or without absorbed CO₂, is an option;
Fig. 7 is a schematic representation of stripping absorbed CO₂ from the sorbent liquid at an onshore facility. In this example it is a greenhouse. The stripping is done at ambient pressure and at ambient temperature, optional at elevated temperature. Ambient air is used as the stripping agent, is enriched with CO₂ and carried into the greenhouse to enhance crop growth;
Fig. 8 is s schematic representation of the stripping conditions of the enriched sorbent liquid. It shows the equilibrium relation between CO₂ partial pressure and CO₂ content of a sorbent liquid (approx. 30 m.-% MEA in water) at low and high temperature. The graph compares conventional stripping to stripping at low CO₂ partial pressure & low temperature;
Fig. 9 is a schematic representation of absorption of CO₂ from flue gas of a fired greenhouse heater during night time; and
Fig.10 is a representation of CO₂ concentrations in stripping air leaving the stripper operating at ambient temperature and ambient pressure, as measured during operation at a greenhouse.

### DETAILED DISCLOSURE OF THE INVENTION

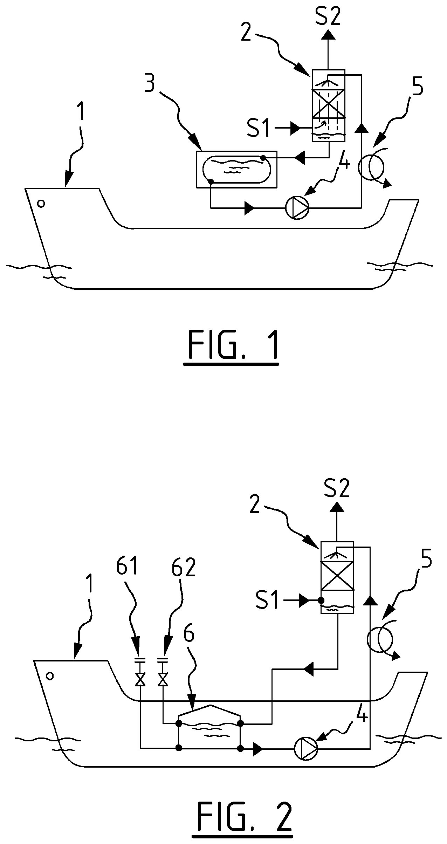

A scheme of the absorption system at a first offshore facility, a vessel, is shown in figure 1. The components of the absorption system comprise a CO₂ absorber or scrubber 2, a sorbent liquid container 3, a pump 4 and an optional solvent cooler 5. Part or all of the flue gas from the ship propulsion system (stream S1) is carried through the CO₂ scrubber 2. Part or most of the CO₂ present in the stream S1 is absorbed by the sorbent liquid in the scrubber 2. The sorbent liquid is pumped from the exchangeable container 3 into the scrubber 2 by the pump 4, optionally cooled by the cooler 5. The flue gas from which CO₂ has been at least partly stripped is discharged as stream S2, for instance into the air. The sorbent liquid, enriched with CO₂ absorbed from the flue gas (S1), is drained back to the container 3.

As known in the art, the scrubber 2 may be fitted with a liquid distributor and packing material for improvement of flue gas-sorbent liquid contact and CO₂ transfer, at the same time keeping pressure drop as low as possible. The scrubber 2 is preferably operated with counter-current flow of flue gas and sorbent liquid. The optional sorbent liquid cooler 5 removes absorption heat from the sorbent liquid and keeps sorbent liquid temperature low to maximize the CO₂ absorption capacity of the sorbent.

Operation of the absorption system is straightforward: the sorbent liquid is circulated through the scrubber 2 until saturation of the sorbent at operating conditions is achieved. Maximum CO₂ absorption capacity depends on type and concentration of the sorbent liquid chemical, and temperature and CO₂ content of the flue gas stream (S1), as well as temperatures of the flue gas and the sorbent liquid.

As shown in figure 1, the first offshore facility, a vessel 1, is provided with an exchangeable tank container 3 for the sorbent liquid. Figure 2 shows an alternative first offshore facility, a vessel 1, provided with a permanently installed container or tank 6 to contain the sorbent liquid. The sorbent liquid can be loaded via line 62, and can be unloaded via line 61, and transported by lorry or barge to onshore storage or to an end-user.

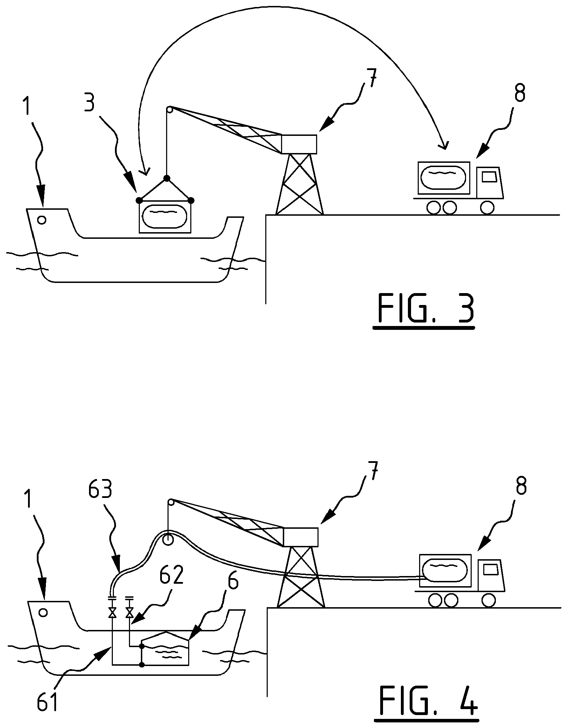

Referring to figure 3, handling of a sorbent liquid tank container 3 at a harbour is shown. One or more containers 3 with fresh sorbent liquid with relatively low CO₂-content can be loaded from a lorry 8 by hoist 7 onto a vessel 1 or other off-shore facility in a harbour. One or several containers 3, with sorbent liquid enriched with CO₂, can be off-loaded in a harbour by hoist 7 and transported by lorry 8 or barge to onshore storage or to an end-user.

With reference to figure 4, pumping of sorbent liquid to (or from) a tank 6 permanently installed on a vessel 1 via hose 63 is schematically shown. Unloading occurs via a line 61, while filling the tank 3 may be carried out via line 62. In this embodiment, loading is to (or from) a lorry 8 with tank.

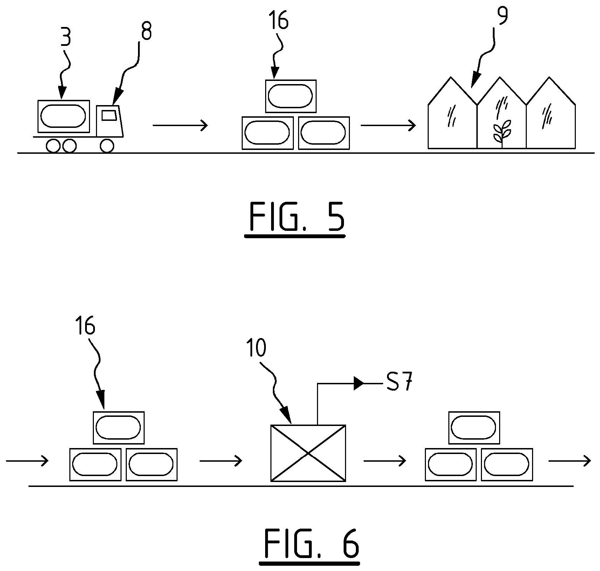

Figure 5 shows a lorry 8 transporting a tank container 3 with sorbent liquid, rich in CO₂, to an end-user, which, in this embodiment comprises a greenhouse 9 on shore. Intermediate storage of sorbent liquid containers 16 is an option, as shown. Transport and storage is preferably done at ambient temperature and ambient pressure.

Figure 6 shows another embodiment in which tank containers 3 with sorbent liquid, rich in CO₂, are provided to a (second) stripping facility 10 for recovery of pure CO₂ (stream S7). The pure CO₂ may be pressurized and/or liquefied according to the requirements of the end-user. The containers 3 with sorbent liquid (rich in CO₂ or stripped from CO₂) may be stored at the stripping facility 10 or elsewhere onshore 16.

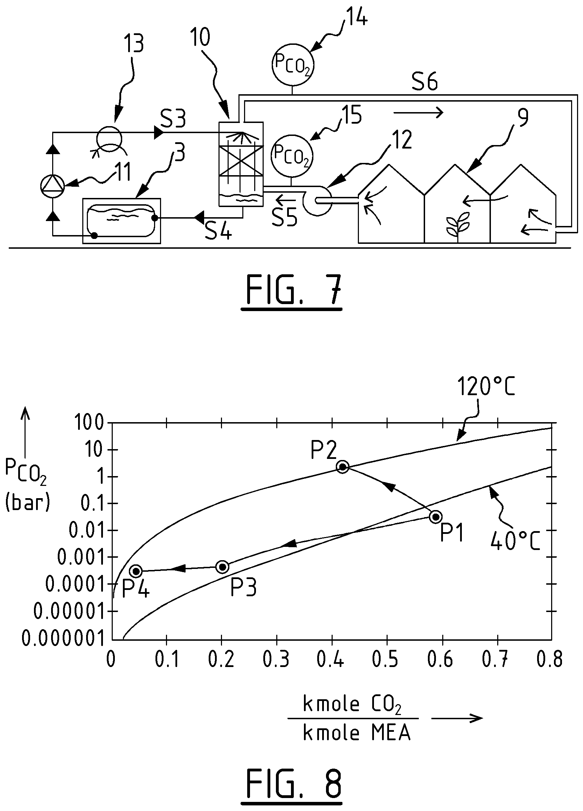

Figure 7 shows yet another embodiment in which stripping of CO₂ from a sorbent liquid in container 3 is performed at an end-user, in particular a greenhouse 9, using a stripper 10. The stripper operates at near ambient pressure and temperature. Pump 11 circulates sorbent liquid (stream S3) from the sorbent liquid tank container 3 through the stripper 10. Heater 13 enables stripping at higher temperatures and is optional. Sorbent liquid leaving the stripper (S4) is drained back by gravity to the tank container 3. Air, external or from the greenhouse (stream S5), is carried through the stripper by an air fan 12 and is enriched with CO₂. The air provides heat required for the CO₂-sorbent liquid (amine) dissociation reaction, it acts as the stripping medium, and it acts as transport medium for the CO₂. Air enriched with CO₂ (stream S6) is supplied to the greenhouse 9 to enhance crop growth. CO₂ analysers may be provided in the air stream entering the stripper 15 and leaving the stripper 14 and enable monitoring of the CO₂ content of the air in the greenhouse.

The stripper 10 may be fitted with a liquid distributor and packing material for improvement of flue gas-sorbent liquid contact and CO₂ transfer, at the same time keeping pressure drop as low as possible. The stripper 10 is preferably operated with counter-current flow of air and sorbent liquid. The optional sorbent liquid heater 13 increases the temperature of the sorbent liquid, to improve stripping of CO₂ from the sorbent liquid.

Operation of the stripper system is straightforward: the sorbent liquid (S3) is supplied to the stripper 10, air (S5) is passed through the stripper. CO₂ analysers (14, 15) provide information on the CO₂ content of the air in the greenhouse. Control is by switching on or off, or throttling sorbent liquid flow and/or air flow through the stripper. Analysers (14, 15) also indicate when the sorbent liquid is stripped from CO₂.

Figure 8 schematically shows the relation between a gas phase containing CO₂ at a certain partial pressure (y-axis) and the CO₂ content of a sorbent liquid containing about 30 wt.% MEA in water, in chemical equilibrium with each other at temperatures of 40°C and 120°C (x-axis). The condition of the sorbent liquid in equilibrium with flue gas containing about 8,5 vol.% flue gas at about 40°C is represented by point P1.

As is known to a person skilled in the art of conventional sorbent stripping, recovery of pure CO₂ at 1-3 bar pressure from a CO₂-containing MEA solvent requires high temperatures. Stripping at about 120°C to release pure CO₂ at about 3 bar is indicated by point P2. At this condition, about 0.4-0.45 kmole CO₂/kmole MEA remains in the sorbent liquid. Only about 30% of the CO₂ contained in the sorbent liquid is recovered. Stripping with ambient air, which has low CO₂ partial pressure (currently about 420 ppm CO₂, about 0.00042 bar), results in far higher recovery of CO₂ from the sorbent liquid. The stripper can be operated at low temperature, ambient or mildly elevated. Energy consumption is minimized. The achievable condition of the sorbent liquid is indicated by point P3. At about 40°C only about 0.2 kmole CO₂/kmole MEA remains in the sorbent liquid, more than 60% of the CO₂ contained in the sorbent liquid can be recovered.

An option is to increase the temperature of the sorbent liquid supplied to the stripper to 80-100°C, if cheap heat at this temperature level is available. The sorbent liquid can then be stripped to the condition indicated by point P4, increasing CO₂ recovery to about 90%.

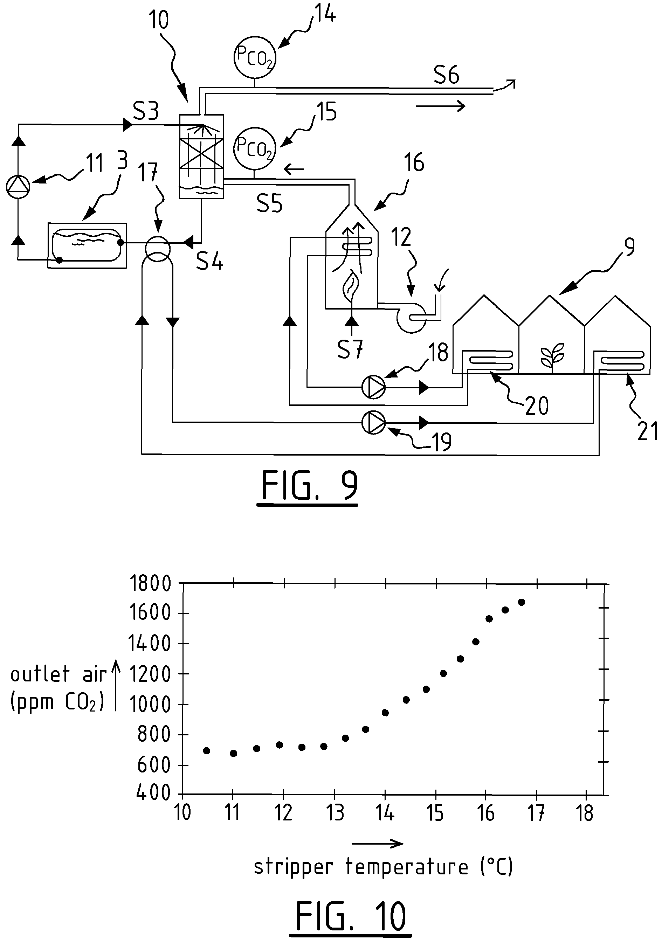

Figure 9 schematically shows absorption of CO₂ from flue gas of a fired greenhouse heater. The stripper (10) in this embodiment is operated in reverse mode as an absorber. The CO₂ in the flue gas from the fired heater, after cooling down, is absorbed by the sorbent. The CO₂ can be stripped and utilized to enhance crop growth during daytime. This method of operation can be applied during night time, and when no assimilation light is used in the greenhouse. Under such conditions there is no consumption of CO₂ by the crop. The stripper (10) in figure 7 is used as an absorber (10) in figure 9. Flue gas from the fired heater (stream S5) is carried through the absorber (10). The CO₂ in the flue gas enriches the sorbent, and can be stripped and utilized for crop growth during daytime. Pump (11) circulates sorbent liquid (stream S3) from the sorbent liquid tank container (3) through the absorber (10). The absorption is performed at near ambient pressure and -temperature. Sorbent liquid leaving the absorber (S4) is returned the sorbent container (3). Flue gas discharged by the absorber (10) is discharged to ambient (stream S6). The heat produced by the fired heater (16) is transferred to the greenhouse. Optional, cooler (17) removes absorption heat from the sorbent, which can be used to supply additional heat to the greenhouse by a heat transfer fluid circulated by pump (19) through a greenhouse heater (21). Pump (18) circulates heat transfer fluid through the fired heater (16) and through a heater (20) in the greenhouse. The CO₂ analysers in the flue gas stream S5 entering the absorber (15) and in the flue gas stream S6 leaving the absorber (14) enable monitoring of the absorption process.

The absorber (10) may be fitted with a liquid distributor and packing material for improvement of flue gas-sorbent liquid contact and CO₂ transfer, at the same time keeping pressure drop as low as possible. Further, the absorber (10) is preferably operated with counter-current flow of air and sorbent liquid, and the optional sorbent liquid cooler (17) may reduce the temperature of the sorbent liquid, to improve the absorption of CO₂ by the sorbent liquid.

The absorption system operates such that the sorbent liquid (stream S3) is supplied to the absorber (10) by pump (11). The enriched sorbent liquid (stream S4) returns to the sorbent storage container after (optional) cool down by cooler (17).

Figure 10 finally represents CO₂ concentrations in stripping air leaving the stripper operating at ambient temperature and ambient pressure. The amine solvent had been enriched in an absorber installed on sailing vessel. Enrichment of air up to an end concentration of 1000 ppm CO₂, resulting in near maximum enhancement of crop growth in a greenhouse, is already achieved at a stripper temperature of approx.15°C.

## Claims

1. Method for removing carbon dioxide (CO₂) from a gas, for instance a flue gas, the method comprising:
a) providing a sorbent liquid for the CO₂, such as an amine solvent, in countercurrent flow with a gas stream comprising the CO₂ and absorbing the CO₂ in the sorbent liquid so as to obtain a gas with a reduced concentration of CO₂, and a sorbent liquid enriched with the absorbed CO₂;
b) stripping the absorbed CO₂ from the enriched sorbent liquid so as to obtain a regenerated sorbent liquid and CO₂-containing gas,
wherein
- the absorbing step a) is performed at a first facility provided in a first location;
- the sorbent liquid enriched with the absorbed CO₂ is transported from the first facility to a second facility distinct from the first facility and provided in a second location at a distance of at least 3 km from the first location;
- the stripping step b) is performed at the second facility and at least 24 hours later than the absorbing step a);
- there is no pipeline connection between the first facility and the second facility; and
- the second facility comprises a greenhouse.

2. Method as claimed in claim 1, wherein the sorbent liquid enriched with the absorbed CO₂ is stored at the first facility before transporting it to the second facility.

3. Method as claimed in claim 1 or 2, wherein the sorbent liquid enriched with the absorbed CO₂ is stored at an intermediate location in between the first and second facilities.

4. Method as claimed in claim 2 or 3, wherein the total time of transporting and storing the sorbent liquid enriched with the absorbed CO₂ is at least 24 hours.

5. Method as claimed in any one of the preceding claims, wherein the sorbent liquid enriched with the absorbed CO₂ is transported at ambient pressure and/or ambient temperature, for instance by a road transport vehicle.

6. Method as claimed in any one of the preceding claims, wherein a shortest distance between the first and the second facilities is at least 3 km, more preferably at least 5 km, and most preferably at least 10 km.

7. Method as claimed in any one of the preceding claims, wherein the first facility comprises a sailing or harbored vessel and the second facility comprises an onshore facility.

8. Method as claimed in any one of the preceding claims, wherein the stripping step b) is performed at a temperature below 100°C, more preferably below 70°C, even more preferably below 40°C, and most preferably at ambient temperature.

9. Method as claimed in any one of the preceding claims, wherein the stripping step b) is performed at ambient pressure.

10. Method as claimed in any one of the preceding claims, wherein the stripping step b) uses greenhouse air and/or ambient air as stripping gas and/or as transport medium of the CO₂-containing gas back to the greenhouse, wherein the CO₂-containing gas as obtained after the stripping step b) is preferably carried back to the greenhouse to enhance crop growth.

11. Method as claimed in any one of the preceding claims, wherein the stripping step b) is carried out with a stripper unit, preferably without a reboiler and/or condenser unit.

12. Method as claimed in any one of the preceding claims, wherein the CO₂-containing gas obtained from the stripping step b) contains from 100 to 10000 ppm (1 vol.%), more preferably from 200 to 5000 ppm, and most preferably from 400 ppm to 1500 ppm CO₂.

13. Method as claimed in any one of the preceding claims, wherein at least 5 wt.% of the CO₂ that is present in the gas stream comprising the CO₂ is absorbed in the sorbent liquid during the absorbing step a), more preferably at least 10 wt.% CO₂, even more preferably at least 30 wt.% CO₂, and most preferably at least 50 wt.% CO₂.

14. Method as claimed in any one of the preceding claims, wherein at most 90 wt.% of the CO₂ that is present in the gas stream comprising the CO₂ is absorbed in the sorbent liquid during the absorbing step a), more preferably at most 70 wt.% CO₂, and most preferably at most 50 wt.% CO₂.

15. Method as claimed in any one of the preceding claims, wherein the second facility comprises a greenhouse with a fired heater, and wherein the second facility is used to absorb CO₂ from the flue gas of the fired heater during night time so as to obtain a flue gas with a reduced concentration of CO₂ and enrichment of the sorbent liquid with CO₂.

## Patentansprüche

1. Verfahren zur Entfernung von Kohlendioxid (CO₂) aus einem Gas, beispielsweise einem Rauchgas, wobei das Verfahren umfasst:
a) Bereitstellen einer Sorptionsflüssigkeit für das CO₂, wie beispielsweise ein Aminlösungsmittel, im Gegenstrom mit einem Gasstrom, der das CO₂ umfasst, und Absorbieren des CO₂ in der Sorptionsflüssigkeit, um ein Gas mit einer reduzierten CO₂-Konzentration und eine Sorptionsflüssigkeit, die mit dem absorbierten CO₂ angereichert ist, zu erhalten;
b) Strippen des absorbierten CO₂ aus der angereicherten Sorptionsflüssigkeit, um eine regenerierte Sorptionsflüssigkeit und CO₂-haltiges Gas zu erhalten,
wobei
- der Absorptionsschritt a) in einer ersten Anlage an einem ersten Standort durchgeführt wird;
- die mit dem absorbierten CO₂ angereicherte Sorptionsflüssigkeit von der ersten Anlage zu einer zweiten Anlage transportiert wird, die von der ersten Anlage getrennt ist, und an einem zweiten Standort in einer Entfernung von mindestens 3 km von dem ersten Standort bereitgestellt wird;
- der Strippungsschritt b) in der zweiten Anlage und mindestens 24 Stunden später als der Absorptionsschritt a) durchgeführt wird;
- zwischen der ersten Anlage und der zweiten Anlage keine Rohrleitungsverbindung besteht; und
- die zweite Anlage ein Gewächshaus umfasst.

2. Verfahren nach Anspruch 1, wobei die mit dem absorbierten CO₂ angereicherte Sorptionsflüssigkeit in der ersten Anlage gelagert wird, bevor es zur zweiten Anlage transportiert wird.

3. Verfahren nach Anspruch 1 oder 2, wobei die mit dem absorbierten CO₂ angereicherte Sorptionsflüssigkeit an einem Zwischenstandort zwischen der ersten und zweiten Anlage gelagert wird.

4. Verfahren nach Anspruch 2 oder 3, wobei die Gesamtzeit des Transports und der Lagerung der mit dem absorbierten CO₂ angereicherten Sorptionsflüssigkeit mindestens 24 Stunden beträgt.

5. Verfahren nach einem der vorstehenden Ansprüche, wobei die mit dem absorbierten CO₂ angereicherte Sorptionsflüssigkeit bei Umgebungsdruck und/oder Umgebungstemperatur, beispielsweise mit einem Straßentransportfahrzeug, transportiert wird.

6. Verfahren nach einem der vorstehenden Ansprüche, wobei die kürzeste Entfernung zwischen der ersten und der zweiten Anlage mindestens 3 km, mehr bevorzugt mindestens 5 km und am meisten bevorzugt mindestens 10 km beträgt.

7. Verfahren nach einem der vorstehenden Ansprüche, wobei die erste Anlage ein Segel- oder im Hafen liegendes Schiff und die zweite Anlage eine Anlage an Land umfasst.

8. Verfahren nach einem der vorstehenden Ansprüche, wobei der Strippungsschritt b) bei einer Temperatur unter 100 °C, mehr bevorzugt unter 70 °C, noch mehr bevorzugt unter 40 °C und am meisten bevorzugt bei Umgebungstemperatur durchgeführt wird.

9. Verfahren nach einem der vorstehenden Ansprüche, wobei der Strippungsschritt b) bei Umgebungsdruck durchgeführt wird.

10. Verfahren nach einem der vorstehenden Ansprüche, wobei im Strippungsschritt b) Treibhausluft und/oder Umgebungsluft als Strippungsgas und/oder als Transportmedium für das CO₂-haltige Gas zurück zum Treibhaus verwendet wird, wobei das nach dem Strippungsschritt b) erhaltene CO₂-haltige Gas vorzugsweise zurück zum Treibhaus geleitet wird, um das Pflanzenwachstum zu fördern.

11. Verfahren nach einem der vorstehenden Ansprüche, wobei der Strippungsschritt b) mit einer Stripper-Einheit, vorzugsweise ohne einen Reboiler und/oder eine Kondensatoreinheit, ausgeführt wird.

12. Verfahren nach einem der vorstehenden Ansprüche, wobei das aus dem Strippungsschritt b) erhaltene CO₂-haltige Gas 100 bis 10000 ppm (1 Vol.-%), mehr bevorzugt 200 bis 5000 ppm und am meisten bevorzugt 400 ppm bis 1500 ppm CO₂ enthält.

13. Verfahren nach einem der vorstehenden Ansprüche, wobei mindestens 5 Gew.-% des CO₂, das in dem Gasstrom, der das CO₂ umfasst, vorhanden ist, während des Absorptionsschritts a) in der Sorptionsflüssigkeit absorbiert werden, mehr bevorzugt mindestens 10 Gew.-% CO₂, noch mehr bevorzugt mindestens 30 Gew.-% CO₂ und am meisten bevorzugt mindestens 50 Gew.-% CO₂.

14. Verfahren nach einem der vorstehenden Ansprüche, wobei höchstens 90 Gew.-% des CO₂, das in dem das CO₂ enthaltenden Gasstrom vorhanden ist, während des Absorptionsschritts a) in der Sorptionsflüssigkeit absorbiert werden, mehr bevorzugt höchstens 70 Gew.-% CO₂ und am meisten bevorzugt höchstens 50 Gew.-% CO₂.

15. Verfahren nach einem der vorstehenden Ansprüche, wobei die zweite Anlage ein Treibhaus mit einem befeuerten Heizgerät umfasst, und wobei die zweite Anlage dazu verwendet wird, CO₂ aus dem Rauchgas des befeuerten Heizgeräts während der Nacht zu absorbieren, um ein Rauchgas mit einer reduzierten CO₂-Konzentration und eine Anreicherung der Sorptionsflüssigkeit mit CO₂ zu erhalten.

## Revendications

1. Procédé permettant d'éliminer du dioxyde de carbone (CO₂) d'un gaz, par exemple un gaz de combustion, le procédé comprenant :
a) la fourniture d'un liquide sorbant pour le CO₂, tel qu'un solvant amine, en écoulement à contre-courant avec un courant gazeux comprenant le CO₂ et l'absorption du CO₂ dans le liquide sorbant de façon à obtenir un gaz avec une concentration réduite en CO₂, et un liquide sorbant enrichi avec le CO₂ absorbé ;
b) l'extraction du CO₂ absorbé du liquide sorbant enrichi de façon à obtenir un liquide sorbant régénéré et un gaz contenant du CO₂,
dans lequel
- l'étape d'absorption a) est mise en œuvre au niveau d'une première installation fournie dans une première localisation ;
- le liquide sorbant enrichi avec le CO₂ absorbé est transporté de la première installation à une seconde installation distincte de la première installation et fourni dans une seconde localisation à une distance d'au moins 3 km de la première localisation ;
- l'étape d'extraction b) est mise en œuvre au niveau de la seconde installation et au moins 24 heures plus tard que l'étape d'absorption a) ;
- il n'y a aucun raccordement de canalisation entre la première installation et la seconde installation ; et
- la seconde installation comprend une serre.

2. Procédé selon la revendication 1, dans lequel le liquide sorbant enrichi avec le CO₂ absorbé est stocké au niveau de la première installation avant son transport vers la seconde installation.

3. Procédé selon la revendication 1 ou 2, dans lequel le liquide sorbant enrichi avec le CO₂ absorbé est stocké au niveau d'une localisation intermédiaire entre les première et seconde installations.

4. Procédé selon la revendication 2 ou 3, dans lequel le temps total de transport et de stockage du liquide sorbant enrichi avec le CO₂ absorbé est d'au moins 24 heures.

5. Procédé selon l'une quelconque des revendications précédentes, dans lequel le liquide sorbant enrichi avec le CO₂ absorbé est transporté à pression ambiante et/ou température ambiante, par exemple par un véhicule de transport routier.

6. Procédé selon l'une quelconque des revendications précédentes, dans lequel une distance la plus courte entre les première et seconde installations est d'au moins 3 km, plus préférablement au moins 5 km, et le plus préférablement au moins 10 km.

7. Procédé selon l'une quelconque des revendications précédentes, dans lequel la première installation comprend un navire en navigation ou à quai et la seconde installation comprend une installation à terre.

8. Procédé selon l'une quelconque des revendications précédentes, dans lequel l'étape d'extraction b) est mise en œuvre à une température inférieure à 100 °C, plus préférablement inférieure à 70 °C, même plus préférablement inférieure à 40 °C, et le plus préférablement à la température ambiante.

9. Procédé selon l'une quelconque des revendications précédentes, dans lequel l'étape d'extraction b) est mise en œuvre à pression ambiante.

10. Procédé selon l'une quelconque des revendications précédentes, dans lequel l'étape d'extraction b) utilise de l'air de serre et/ou de l'air ambiant en guise de gaz d'extraction et/ou en guise de milieu de transport du gaz contenant du CO₂ de retour à la serre, dans lequel le gaz contenant du CO₂ tel qu'obtenu après l'étape d'extraction b) est de préférence ramené à la serre pour améliorer la croissance de cultures.

11. Procédé selon l'une quelconque des revendications précédentes, dans lequel l'étape d'extraction b) est effectuée avec une unité d'extracteur, de préférence sans unité de rebouilleur et/ou de condenseur.

12. Procédé selon l'une quelconque des revendications précédentes, dans lequel le gaz contenant du CO₂ obtenu par l'étape d'extraction b) contient de 100 à 10000 ppm (1 % en vol.), plus préférablement de 200 à 5000 ppm, et le plus préférablement de 400 ppm à 1500 ppm de CO₂.

13. Procédé selon l'une quelconque des revendications précédentes, dans lequel au moins 5 % en poids du CO₂ qui est présent dans le courant gazeux comprenant le CO₂ est absorbé dans le liquide sorbant pendant l'étape d'absorption a), plus préférablement au moins 10 % en poids de CO₂, encore plus préférablement au moins 30 % en poids de CO₂, et le plus préférablement au moins 50 % en poids de CO₂.

14. Procédé selon l'une quelconque des revendications précédentes, dans lequel au plus 90 % en poids du CO₂ qui est présent dans le courant gazeux comprenant le CO₂ est absorbé dans le liquide sorbant pendant l'étape d'absorption a), plus préférablement au plus 70 % en poids de CO₂, et le plus préférablement au plus 50 % en poids de CO₂.

15. Procédé selon l'une quelconque des revendications précédentes, dans lequel la seconde installation comprend une serre avec un dispositif de chauffage à combustible, et dans lequel la seconde installation est utilisée pour absorber le CO₂ provenant du gaz de combustion du dispositif de chauffage à combustible pendant la nuit de façon à obtenir un gaz de combustion avec une concentration réduite en CO₂ et un enrichissement du liquide sorbant avec du CO₂.
